# EUROPEAN PATENT APPLICATION

(11) **EP 2 503 767 A2**
(43) Date of publication of application: **26.09.2012**
(21) Application number: 12150680.2
(22) Date of filing: 10.01.2012
(51) Int. Cl.: H04M 3/56

(54) **Video display apparatus, noise removing method, and video display system**

(30) Priority: 22.03.2011 JP 2011063210
(71) Applicant: Kabushiki Kaisha Toshiba, Tokyo 105-8001 (JP)
(72) Inventor: Numano, Fujihito, Tokyo, 105-8001 (JP); Nakagawa, Tooru, Tokyo, 105-8001 (JP)
(74) Representative: Henkel, Breuer & Partner

(57) **Abstract**

According to one embodiment, a video display apparatus (100) includes: a broadcast data input module (211) ; at least one data input module (260); and a frequency controller (236a). The broadcast data input module (211) is configured to input broadcast contents containing sound data. The data input module (260) is configured to input information containing sound data other than the sound data contained in the broadcast contents. The frequency controller (236a) is configured to receive the sound data, and configured to perform an operation allowing only frequencies within a necessary range to pass therethrough, the operation of the frequency controller (236a) being selectively enabled or disabled under control of the data input module (260).

## Description

### FIELD

Embodiments described herein relate generally to a video display apparatus, a noise removing method, and a video display system.

### BACKGROUND

Conventionally, there is proposed various applications for making/receiving calls among communication devices connected with each other via a network, as the network technology is advanced.

Further, digital devices become more and more sophisticated as the performance of processors is improved and the software technology is developed. Accordingly, various functions are begun to be installed in digital television display devices. As a result, the digital television display devices have become capable of, for example, obtaining television program information from a communication device connected via a network.

For the digital television display devices, there is proposed an Internet protocol (IP) phone function for making calls to or receiving calls from a communication device connected thereto via a network. For such IP phone function, it has been desired to remove noise from the sound at high level and to output a high-quality sound.

In some digital television display devices, a speaker has a band-pass filter circuit mounted thereon to remove noise. Apart from that, there is known a technique of adjusting the band-pass with an equalizer to remove the noise.

However, if the noise removal is performed continuously by the band-pass filter circuit mounted in the speaker, the power-saving feature of the digital television display device might be affected, or there might be caused an adverse effect on the sound quality of other functions such as an Internet protocol (IP) phone function.

The present invention has been made in view of the above, and it is an object of the invention to provide a video display apparatus, a noise removing method, and a video display system that can output a high-quality sound for sound data output from an IP phone function without affecting a power-saving feature of the video display apparatus.

### SUMMARY

To overcome the problems and achieve the object mentioned above, according to one embodiment, a video display apparatus comprises: a broadcast data input module; at least one data input module; and a frequency controller. The broadcast data input module is configured to input broadcast contents containing sound data. The data input module is configured to input information containing sound data other than the sound data contained in the broadcast contents. The frequency controller is configured to receive the sound data, and configured to perform an operation allowing only frequencies within a necessary range to pass therethrough, the operation of the frequency controller being selectively enabled or disabled under control of the data input module.

According to another embodiment, a noise removing method of a video display apparatus comprising a broadcast data input module configured to input broadcast contents containing sound data and at least one data input module configured to input information containing sound data other than the sound data contained in the broadcast contents, the noise removing method comprises: inputting the sound data; and selectively enabling or disabling, under control of the data input module, a frequency controller configured to perform an operation allowing only frequencies within a necessary range to pass therethrough.

According to still another embodiment, a video display system comprises: a video display apparatus; and an information processor connected to the video display apparatus via a network. The video display apparatus comprises: a broadcast data input module configured to input broadcast contents containing sound data; at least one data input module configured to input information containing sound data other than the sound data contained in the broadcast contents; and a frequency controller configured to receive the sound data, and configured to perform an operation allowing only frequencies within a necessary range to pass therethrough, the operation of the frequency controller being selectively enabled or disabled under control of the data input module.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary diagram illustrating an environment for using a digital television receiver according to a first embodiment;
FIG. 2 is an exemplary block diagram of a video display apparatus and a communication apparatus incorporated therein in the first embodiment;
FIG. 3 is an exemplary block diagram of an IP phone module in the first embodiment;
FIG. 4 is an exemplary diagram illustrating data configuration of videophone data in the first embodiment;
FIG. 5 is an exemplary diagram of an incoming call display screen displayed on a display, in the first embodiment;
FIG. 6 is an exemplary diagram of a caller picture display screen displayed on the display, in the first embodiment;
FIG. 7 is an exemplary flowchart of a noise removal control process performed in the IP phone module in the first embodiment;
FIG. 8 is an exemplary block diagram of an IP phone module according to a second embodiment;
FIG. 9 is an exemplary flowchart of a noise removal control process performed in the IP phone module in the second embodiment; and
FIG. 10 is an exemplary flowchart of a noise removal control process performed in an IP phone module according to a third embodiment.

### DETAILED DESCRIPTION

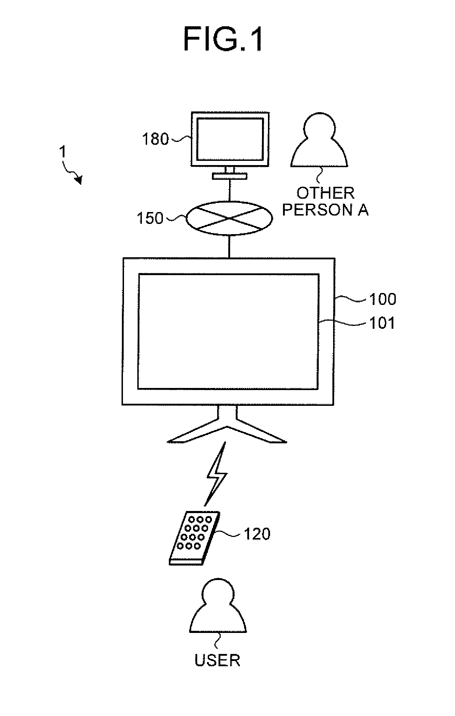

A first embodiment is described below with reference to the accompanying drawings. FIG. 1 is a diagram illustrating an environment for using a digital television receiver functioning as a video display apparatus 100 according to the first embodiment. As illustrated in FIG. 1, as a digital television receiver, the video display apparatus 100 according to the first embodiment displays the received program contents on a display screen 101. The video display apparatus 100 is connected to a communication device 180 such as a personal computer or a digital television serving as an information processing apparatus, via a network 150 such as the Internet communication line. The video display apparatus 100 and the communication device 180 constitute a video display system 1.

The video display apparatus 100 makes calls to or receives calls from a communication device connected to the network 150 using a videophone. This enables the video display apparatus 100 to communicate with the communication device 180 using a videophone. Meanwhile, a remote controller 120 used to select programs may be used to pickup calls or to hang up calls.

In order to make such communication possible, the video display apparatus 100 is assigned with an ID to be referred to at the time of the communication. Accordingly, at the time of making a call to or at the time of receiving a call from the video display apparatus 100, the communication device 180 can select that ID as the other end of the call.

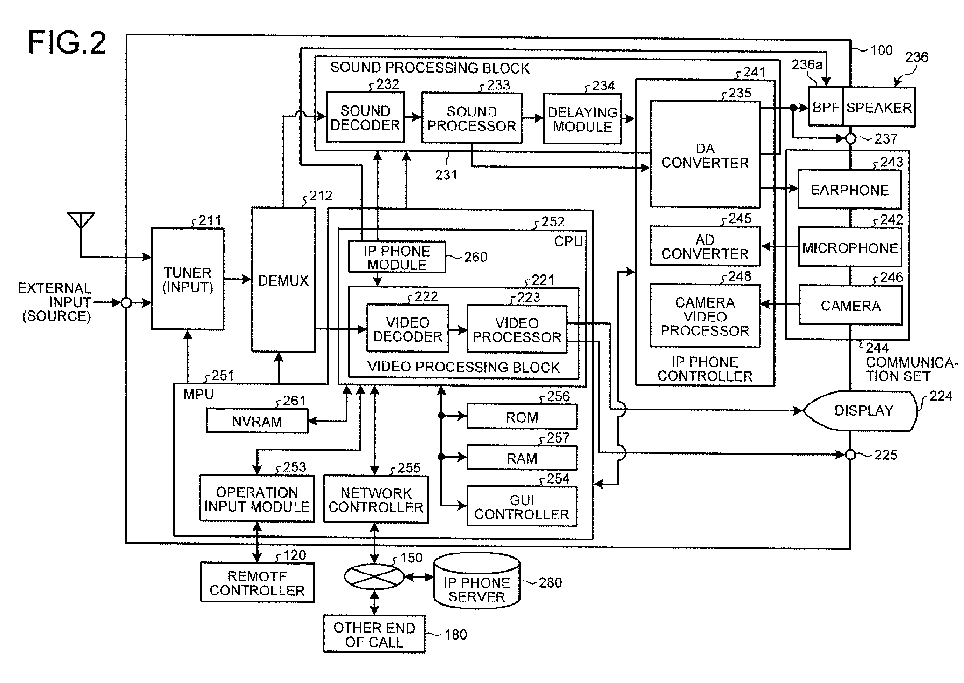

FIG. 2 is a block diagram of the video display apparatus and a communication apparatus incorporated therein according to the embodiment. Herein, the components, the configuration, and the functions described below can be put into practice either with hardware or with software using a microcomputer (a processor or a central processing unit (CPU)).

The video display apparatus 100 illustrated in FIG. 2 comprises a digital television receiver for receiving, for example, television broadcast and reproducing sound (audio) and video.

Herein, the video display apparatus 100 receives and reproduces at least programs (i.e., contents) of the digital broadcast. Further, the video display apparatus 100 is capable of receiving the contents provided via the network 150. Still further, the video display apparatus 100 can use the IP phone with sound (including audio) and moving images (video), with respect to any device connected thereto via the network 150 using the Internet protocol. The video display apparatus 100 is connected to an IP phone server 280 via the network 150.

In the video display apparatus 100, a tuner 211 functions as a broadcast data input module which receives broadcast contents (programs) containing first sound data via an antenna or an external input terminal. A demultiplexer (demux) 212 demultiplexes the received broadcast contents into video data and sound (audio) data.

In the video display apparatus 100, a video processing block 221 comprises a video decoder 222 and a video processor 223. The video decoder 222 decodes the video data demultiplexed by the demultiplexer 212, and outputs the decoded video data to the video processor 223.

The video processor 223 processes the decoded video data received from the video decoder 222 into a format displayable on a latter-stage display 224. In the embodiment, the video processor 223 converts the video data into data of a predetermined resolution, a predetermined frame rate, and a predetermined output mode such as the interlace (i) /non-interlace (p) mode, and then feeds the converted video data to the display 224. Herein, the output of the video processor 223 can also be fed to an output terminal 225 to which, for example, an external monitor or a projector is connectable.

Meanwhile, the sound (audio) data demultiplexed by the demultiplexer 212 is input to a sound (audio) processing block 231, which comprises a sound decoder 232, a sound processor 233, a delaying module 234, and a digital-to-analog (DA) converter 235.

The sound decoder 232 decodes the sound data input thereto, and outputs the decoded sound data to the sound processor 233.

Upon receipt of the sound data decoded by the sound decoder 232, the sound processor 233 processes the sound data so that the sound data becomes reproducible in an audio output device, and outputs it to the delaying module 234. The delaying module 234 delays an output of the received sound data (i.e. , delays the sound (audio) output) by a predetermined time period so as to achieve time consistency with respect to the video data output by the video processor 223. The delayed sound data is then input to the DA convertor 235 for obtaining analog sound (audio) output.

The analog sound (audio) data output by the DA converter 235 is input to, for example, a speaker 236. Besides, the analog sound (audio) data output by the DA converter 235 can also be branched to an output terminal 237 to which an audio visual (AV) amplifier is connectable.

A band-pass filter (BPF) circuit 236a serving as a frequency controller is installed in the speaker 236 to remove noise. The band-pass filter circuit 236a comprises an RLC circuit (a resistor, a coil, and a capacitor) that allows only frequencies within a necessary range to pass therethrough, and blocks (attenuates) other frequencies. The band-pass filter circuit 236a is designed by combining a high-pass filter and a low-pass filter. Meanwhile, it is also possible to use an equalizer that changes the frequency characteristics of sound signals, as the frequency controller.

Meanwhile, the sound (audio) data delayed for the predetermined time period by the delaying module 234 can also be input to an IP phone controller 241. The IP phone controller 241 is connectable to a communication set 244 comprising a microphone 242, an earphone 243, and a camera 246. Herein, instead of the earphone 243, a low-output sound reproducing speaker can be used as a sound reproducing module. The camera 246 is installed to capture the user's face from the external environment.

The IP phone controller 241 comprises an analog-to-digital (AD) converter 245 and a camera video processor 248. The IP phone controller 241 shares the DA convertor 235 with the sound (audio) processing block 231. The AD converter 245 performs analog-to-digital conversion on the analog sound input from the microphone 242. The camera image processor processes the data input from the camera 246, and generates video data.

A main control block 251 controls each of the speaker 236 (the band-pass filter circuit 236a), the tuner 211, the demultiplexer 212, the sound processing block 231, and the IP phone controller 241 of the video display apparatus 100, and instructs those constituent elements to perform predetermined operations.

The main control block (MPU: main processing unit) 251 at least comprises a central processing unit (CPU) 252, a read only memory (ROM) 256, a random access memory (RAM) 257, a graphical user interface (GUI) controller 254, a network controller 255, and an operation input module 253.

The ROM 256 stores therein operation programs. The RAM 257 serves as a work area. The GUI controller 254 displays a GUI on the display 224 and processes the user input received via the GUI.

The CPU 252 is connected to a nonvolatile read only memory (NVRAM) 261, which is a nonvolatile and rewritable memory device serving as a memory for storing a variety of data under the control of the CPU 252.

The network controller 255 controls connection with the network 150, that is, controls obtaining a variety of information from the network 150 and controls the user access to the network 150. In the embodiment, the network controller 255 sends and receives data used in the communication between the video display system 1 and other communication devices.

The operation input module 253 comprises, for example: channel keys (buttons) for identifying the channels selected by the tuner (input module) 211; and a power ON/OFF switch used to switch ON or OFF the power. The operation input module 253 is connected to the MPU 251. The operation input module 253 receives instructions or control input from the remote controller 120. Moreover, a keypad (keyboard) that allows the input of alphabets, codes, and numeric characters may be connected to the operation input module 253.

The remote controller 120 comprises channel keys and a power ON/OFF switch, as well as comprises an operation key for the purpose of starting a call via the IP phone. At the time of performing an operation using that operation key, the operation input module 253 receives instructions based on the operation to be performed.

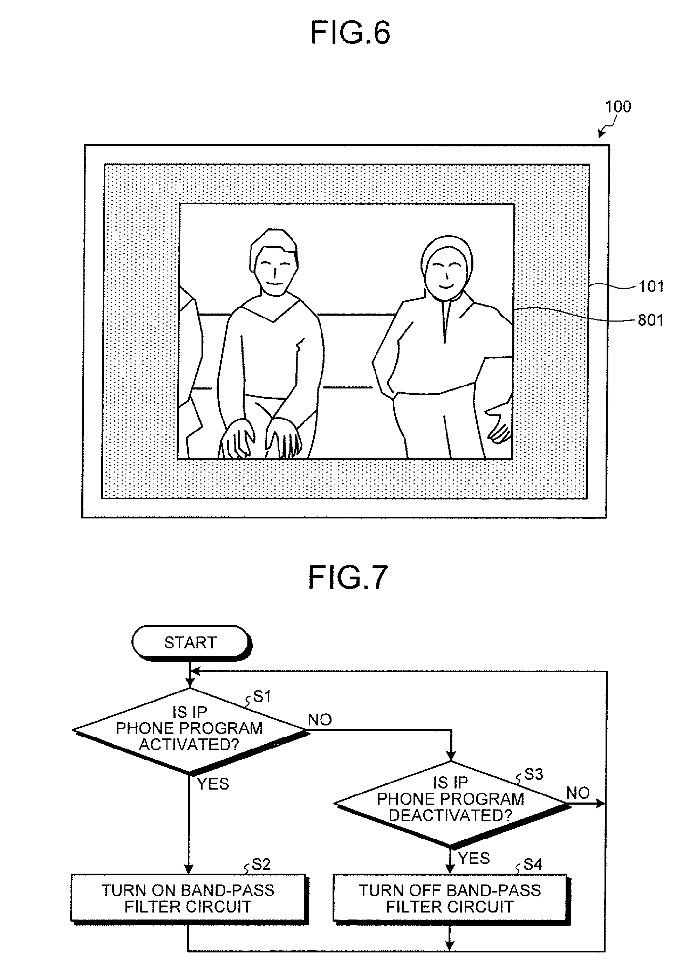

The CPU 252 reads the operation programs from the ROM 256, and performs control according to the operation programs while making use of the RAM 257 as the work area. The operation programs comprises: an operating system (OS); applications such as a television (TV) program application; various drivers; a video processing program; and an IP phone program (see FIG. 7).

The video processing program realizes the video processing block 221 (i.e., the video decoder 222 and the video processor 223).

The IP phone program realizes an IP phone module 260, which is a data input module used for making videophone calls to or receiving videophone calls from the communication device 180 over the network 150. The IP phone program can be provided with functions of known computer programs. For example, the IP phone program can make use of "Skype" (registered trademark), which is the Internet phone software provided by Skype Technologies. Meanwhile, the data input module is not limited to the IP phone module 260, and it can be any input module that is configured to input information containing sound data other than sound data of the broadcast contents. Moreover, it is possible to have more than one data input modules.

The IP phone module 260 packetizes the sound data representing the sound of a user caught by the microphone 242 of the communication set 244, and transmits the packets to the other end of communication via the network 150. Further, if the camera 246 is used, the IP phone module 260 packetizes the video data in which the user is captured, and transmits it with the sound data.

Besides, when information is received from the other end of communication via the network controller 255, the IP phone module 260 demultiplexes sound data (second sound data) and video data from the received information, and decodes the demultiplexed data. The decoded sound data is input to the sound (audio) processing block 231. The sound data processed by the sound processor 233 of the sound processing block 231 is then output to the DA converter 235. Consequently, the sound from the other end of communication is output through the speaker 236 or the earphone 243.

Here, although the details are described below, the band-pass filter circuit 236a of the speaker 236 is operated according to the control from the IP phone module 260 because a high-quality sound output is desired for the sound data (second sound data) from the IP phone module 260.

The decoded video data is input to the video processing block 221. The video processor 223 of the video processing block 221 is capable of reproducing, for example, still images as typified by Joint Photographic Experts Group (JPEG) images or moving images as typified by Moving Picture Experts Group-2 (MPEG-2) images or MPEG-4 (H.264-AVC) images. Thus, the video processor 223 performs processing not only at the time of reproducing the contents but also at the time of reproducing the video data.

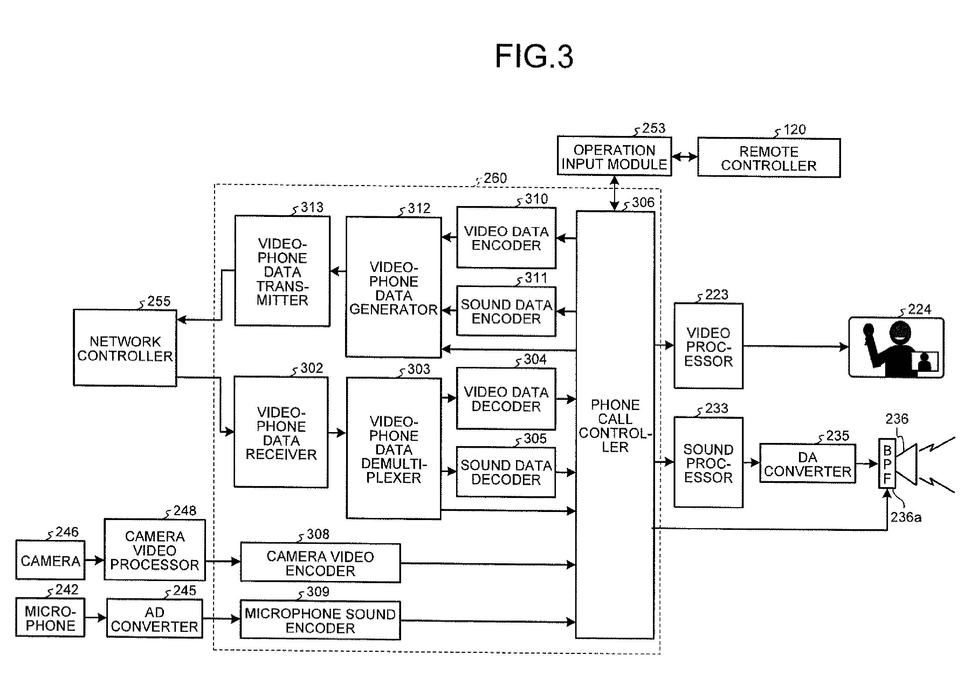

Explained below are the operations performed by the IP phone module 260. FIG. 3 is a block diagram of the IP phone module 260. As illustrated in FIG. 3, the IP phone module 260 comprises: a video data encoder 310; a sound data encoder 311; a videophone data generator 312; a video phone data transmitter 313; a videophone data receiver 302; a videophone data demultiplexer 303; a video data decoder 304; a sound data decoder 305; a phone call controller 306; a camera video encoder 308; and a microphone sound encoder 309.

With the abovementioned configuration, the video display apparatus 100 according to the first embodiment realizes the videophone function.

In the first embodiment, during a videophone call between the video display apparatus 100 and the communication device 180, videophone data is communicated between the video display apparatus 100 and the communication device 180.

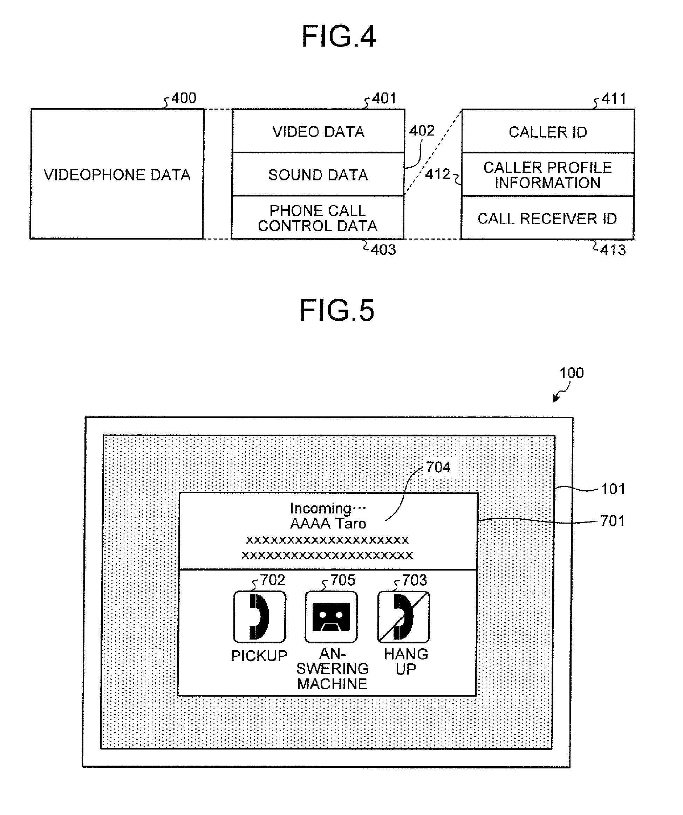

FIG. 4 is a diagram illustrating data configuration of the videophone data. As illustrated in FIG. 4, videophone data 400 contains video data 401, sound data 402, and phone call control data 403. The video data 401 represents the encoded data of videos that are input from the camera 246. The sound data 402 represents the encoded data of sound that is input from the microphone 242.

The phone call control data 403 represents the data used for the control performed during a videophone call. In the embodiment, the phone call control data 403 contains a caller ID 411, caller profile information 412, and a call receiver ID 413.

The caller ID 411 and the call receiver ID 413 are assigned by the IP phone server 280 in such a way that there is no duplication of IDs assigned to the communication apparatuses (including the video display apparatus 100) that are connected to the videophone system or assigned to the users. The caller profile information 412 contains personal information such as the IP address of the caller, a device-specific address, and the name and address of the caller.

By transmitting/receiving the videophone data 400, it becomes possible to make phone calls among the communication apparatuses including the video display apparatus 100.

Returning to FIG. 3, during a phone call, the video display apparatus 100 sends via the network controller 255 the videophone data containing the video data captured by the camera 246 and the sound data captured by the microphone 242. Further, the video display apparatus 100 displays the video data demultiplexed from the videophone data received through the network controller 255 on the display 224, and output the sound data demultiplexed from the videophone data received through the network controller 255 to the speaker 236. Here, in the embodiment, the video data can be either moving image data or still image data.

Furthermore, in the video display apparatus 100, user instructions from the remote controller 120 are received via the operation input module 253, and the television function and the videophone function are controlled according to the instructions.

The camera video encoder 308 encodes the video data generated by the camera video processor 248, and obtains the video data captured by the camera 246.

The microphone sound encoder 309 encodes the digital sound data obtained by the AD converter 245, and obtains the sound data captured by the microphone 242.

The videophone data receiver 302 receives the videophone data, which is the necessary information for communication, from the communication device 180 via the network controller 255. Then, the received videophone data is output to the videophone data demultiplexer 303.

The videophone data demultiplexer 303 demultiplexes the videophone data received from the videophone data receiver 302 into the video data 401, the sound data 402, and the phone call control data 403. Herein, the phone call control data 403 is input directly to the phone call controller 306, without modification.

The video data decoder 304 decodes the demultiplexed video data 401, and outputs the decoded video data to the phone call controller 306. Similarly, the sound data decoder 305 decodes the demultiplexed sound data, and outputs the decoded sound data to the phone call controller 306.

The phone call controller 306 controls making videophone calls to and receiving videophone calls from the communication device 180. For example, when the phone call control data 403 demultiplexed by the videophone data demultiplexer 303 is received, the phone call controller 306 determines whether the call receiver ID 413 comprised in the phone call control data 403 matches with the ID used in identifying the video display apparatus 100. If the call receiver ID 413 matches with the ID used in identifying the video display apparatus 100, the phone call controller 306 allows receiving the incoming call.

FIG. 5 illustrates an example of an incoming call display screen that is displayed on the display 224. As illustrated in FIG. 5, on the display screen 101, an incoming call notification window 701 is superimposed and displayed on the contents. The incoming call notification window 701 comprises a call pickup button 702 for picking up the incoming call, a call hang up button 703 for forcibly hanging up the incoming call, a profile information field 704 on which the profile of the caller is mentioned, and an answering machine button 705 for recording a message from the caller. The videophone call with the caller starts only when the user of the videophone selects the call pickup button 702.

Only when the user of the videophone selects the call pickup button 702, the phone call controller 306 starts controlling the phone call with the communication device 180 that is identified by the caller ID 411. Once the phone call starts being controlled, the phone call controller 306 outputs to the video processor 223 the sender's video data 401 that has been decoded by the video data decoder 304.

Furthermore, with respect to the sound data 402 that has been decoded by the sound data decoder 305, the phone call controller 306 performs various process, and outputs the corrected sound data to the sound processor 233.

Consequently, once the video processor 223 synthesizes the video data, the display 224 displays sender's video data 801 on the display 224 as illustrated in FIG. 6. Further, once the sound processor 233 synthesizes the sound data, the DA converter 235 converts the sound data into sound. Consequently, the sound from the sender' s side is output from the speaker 236.

As described above, a screen for making/receiving a phone call by the IP function such as the "Skype" is not displayed if the broadcast reception or another application is being displayed in the video display apparatus 100. Further, when an incoming call is received while an application such as the television program has been executed, only a notification of the incoming call is displayed on the display screen 101. Consequently, the user has to close the running application such as the television program, start the IP phone program using the remote controller 120, and respond to the incoming call by running the IP phone function.

When the controlling of the phone call starts, the phone call controller 306 may superpose the sender's video data 401 decoded by the video data decoder 304 on the receiver' s video data received from the camera video encoder 308, and outputs the superposed data to the video processor 223. In that case, the display 224 displays such video data containing the sender' s video data and the receiver's video data.

Explained below is a noise removal control process performed in the IP phone module 260 of the video display apparatus 100 according to the first embodiment.

FIG. 7 is a flowchart of the noise removal control process. As illustrated in FIG. 7, once the IP phone program is activated (Yes at S1), the IP phone module 260 turns ON (enables) the band-pass filter circuit 236a of the speaker 236 (S2).

When the IP phone program is deactivated (Yes at S3), the IP phone module 260 turns OFF (disables) the band-pass filter circuit 236a of the speaker 236 (S4).

As described above, with respect to the sound data output from the IP phone module 260 (i.e., regarding the second sound data), the video display apparatus 100 according to the first embodiment allows only frequencies within a necessary range to pass therethrough and blocks (attenuates) other frequencies causing noise. As a result, it becomes possible to output from the speaker 236 a high-quality sound of the other end of communication. On the other hand, the sound data of the broadcast contents (i.e. , the second sound data) is output from the speaker 236 without operating the band-pass filter circuit 236a. Hence, there is no adverse effect on the power-saving feature of the video display apparatus 100.

A second embodiment is described below with reference to the accompanying drawings. In the second embodiment, the constituent elements identical to that in the first embodiment are referred to by the same reference numerals, and the explanation thereof is not omitted.

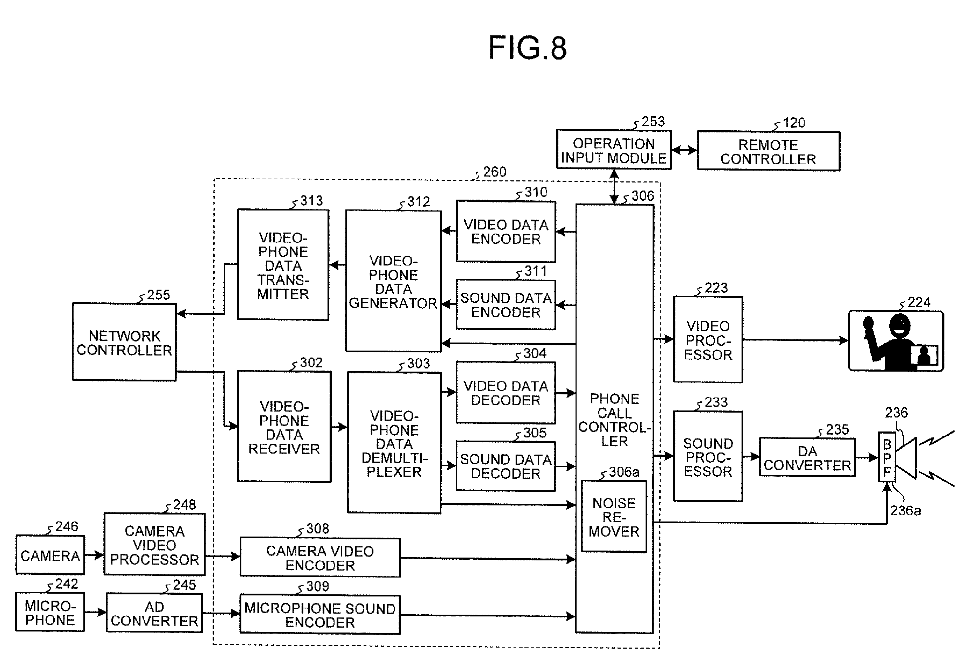

FIG. 8 is a block diagram of the IP phone module 260 according to the second embodiment. As illustrated in FIG. 8, the phone call controller 306 of the IP phone module 260 of the second embodiment comprises a noise remover 306a.

With respect to the sound data 402 decoded by the sound data decoder 305, the noise remover 306a performs a variety of noise removing process such as noise reduction process, noise cancelling process, and/or band-pass filtering process. The noise reduction process removes components assumed to be the noise. The noise cancelling process cancels noise by superimposing the anti-phase waveform of the surrounding noise caught by the microphone 242. The band-pass filtering process retrieves only a specific frequency band. Then, the noise remover 306a outputs the processed sound data to the sound processor 233.

Explained below is a noise removal control process performed in the IP phone module 260 of the video display apparatus 100 according to the second embodiment.

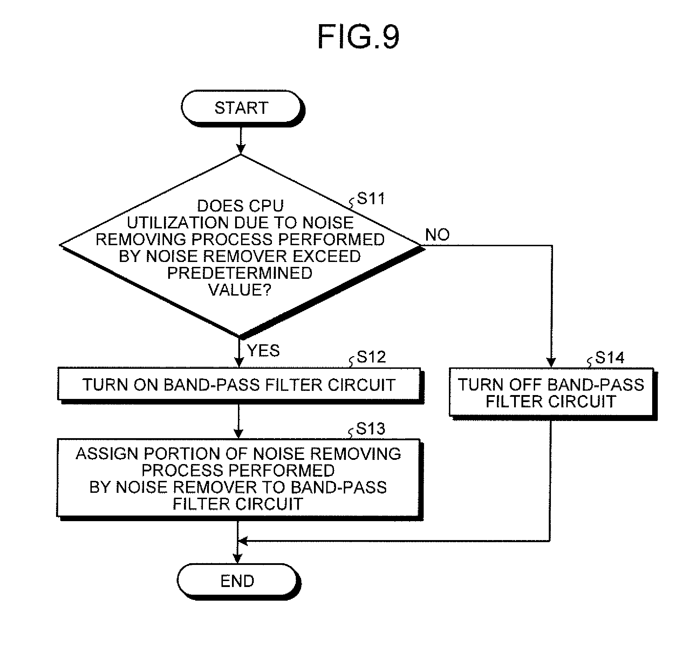

FIG. 9 is a flowchart of the noise removal control process performed in the IP phone module 260. As illustrated in FIG. 9 , when the CPU utilization due to the noise removing process performed by the noise remover 306a exceeds a predetermined value (Yes at S11), the IP phone module 260 turns ON (enables) the band-pass filter circuit 236a of the speaker 236 to lower the load on the noise remover 306a (S12), and instructs the noise remover 306a to assign a portion of the noise removing process to the band-pass filter circuit 236a (S13). For example, if the noise remover 306a is configured to perform noise reduction process only on the frequencies within the frequency range which are allowed to pass through the band-pass filter circuit 236a, it becomes possible to lower the load on the noise remover 306a.

Since the method of calculating the CPU utilization is well known, the explanation thereof is not given. The load on the CPU 252 due to the present process increases as the value of the CPU utilization increases.

When the CPU utilization due to the noise removing process performed by the noise remover 306a does not exceed (falls below) the predetermined value (No at S11), the IP phone module 260 turns OFF (disables) the band-pass filter circuit 236a of the speaker 236 (S14).

As described above, in the video display apparatus 100 according to the second embodiment, the band-pass filter circuit 236a of the speaker is driven only when the CPU utilization due to the noise removing process performed by the noise remover 306a exceeds a predetermined value. Consequently, it becomes possible not only to keep down the amount of CPU resources consumed by the noise removing process performed by the noise remover 306a but also to suppress any adverse effect influencing the power-saving feature of the video display apparatus 100.

A third embodiment is described below with reference to the accompanying drawings. In the third embodiment, the constituent elements identical to that in the first embodiment or the second embodiment are referred to by the same reference numerals, and the explanation thereof is not repeated.

Explained below is noise removal control process performed in the IP phone module 260 of the video display apparatus 100 according to the third embodiment.

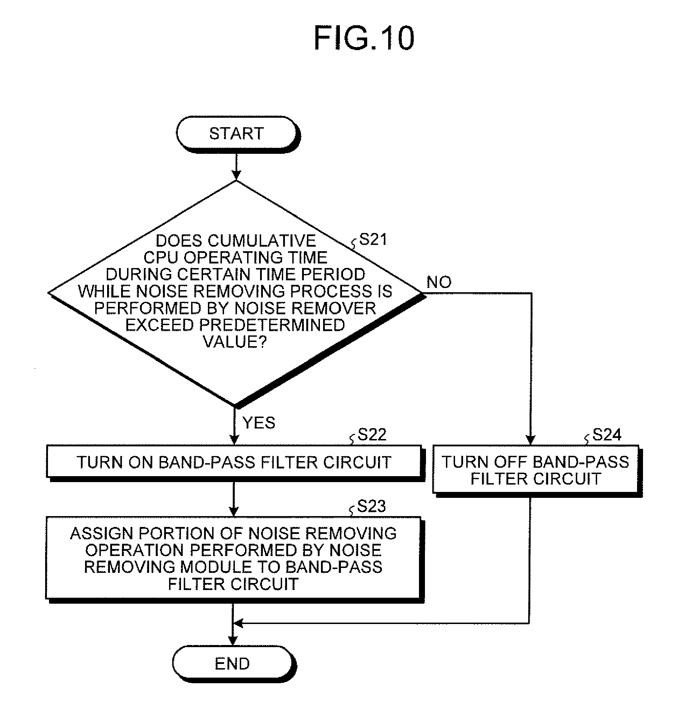

FIG. 10 is a flowchart of the noise removal control process performed in the IP phone module 260. As illustrated in FIG. 10, if the cumulative CPU operating time during a certain time period while the noise removing process is performed by the noise remover 306a exceeds a predetermined value (Yes at S21), the IP phone module 260 turns ON (enables) the band-pass filter circuit 236a of the speaker 236 to lower the load on the noise remover 306a (S22), and instructs the noise remover 306a to assign a portion of the noise removing process to the band-pass filter circuit 236a (S23). For example, if the noise remover 306a is configured to perform noise reduction process only on the frequencies within the frequency range which are allowed to pass through the band-pass filter circuit 236a, it becomes possible to lower the load on the noise remover 306a.

Since the method of calculating the cumulative CPU operating time is well known, the explanation thereof is not given. Irrespective of whether the value of CPU utilization is small, if a value of the cumulative CPU operating time during a certain time period is large, it means that the corresponding process has been continuously placing load on the CPU 252.

When the cumulative CPU operating time during a certain time period while the noise removing process is performed by the noise remover 306a does not exceed (falls below) the predetermined value (No at S21), the IP phone module 260 turns OFF (disables) the band-pass filter circuit 236a of the speaker 236 (S24).

In this way, in the video display apparatus 100 according to the third embodiment, the band-pass filter circuit 236a of the speaker is driven only when the cumulative CPU operating time during a certain time period while the noise removing process is performed by the noise remover 306a exceeds a predetermined value. That makes it possible not only to keep down the amount of CPU resources consumed by the noise removing process performed by the noise remover 306a but also to suppress any adverse effect influencing the power-saving feature of the video display apparatus 100.

The IP phone program executed in the video display apparatus 100 according to the embodiments is stored in advance in the ROM 256 or the like.

Alternatively, the IP phone program executed in the video display apparatus 100 according to the embodiments can be provided in the form of an installable or executable on a computer-readable recording medium such as a compact disk read only memory (CD-ROM), a flexible disk (FD), a compact disk readable (CD-R), or a digital versatile disk (DVD).

Still alternatively, the IP phone program executed in the video display apparatus 100 according to the embodiments can be saved as downloadable files on a computer connected to a network such as the Internet or can be made available for distribution through the network.

The IP phone program executed in the video display apparatus 100 according to the aforementioned embodiments has a module configuration comprising each of the aforementioned modules (IP phone module 260) . Regarding the actual hardware, the CPU (processor) reads out the IP phone program from the ROM 256 and runs it so that the IP phone program is loaded in the main memory device. As a result, the IP phone module 260 is realized in the main memory device.

In the embodiments, the explanation is given for the case when the video display apparatus 100 is applied to a digital television receiver. However, the video display apparatus 100 can also be as applied to a hard disk drive (HDD) recorder, a tuner, a set-top box, or the like.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A video display apparatus (100) comprising:
a broadcast data input module (211) configured to input broadcast contents containing sound data;
at least one data input module (260) configured to input information containing sound data other than the sound data contained in the broadcast contents; and
a frequency controller (236a) configured to receive the sound data, and configured to perform an operation allowing only frequencies within a necessary range to pass therethrough, the operation of the frequency controller (236a) being selectively enabled or disabled under control of the data input module (260).

2. The video display apparatus (100) of Claim 1, wherein the frequency controller (236a) is enabled when the data input module (260) is active, and is disabled when the data input module (260) is inactive.

3. The video display apparatus (100) of Claim 1, further comprising a noise remover (306a) configured to be a part of a controller (252) controlling the video display apparatus (100), and configured to remove noise of the sound data other than the sound data contained in the broadcast contents, wherein,
when a load on the controller (252) due to a noise removing process of the noise remover (306a) exceeds a predetermined value, the data input module (260) enables the frequency controller (236a), and
the noise remover (306a) assigns a portion of the noise removing process to the frequency controller (236a).

4. The video display apparatus (100) of Claim 3, wherein, when a value of utilization of the controller (252) due to the noise removing process of the noise remover (306a) exceeds a predetermined value, the data input module (260) enables the frequency controller (236a).

5. The video display apparatus (100) of Claim 3, wherein, when a cumulative operating time of the controller during a certain time period while the noise removing process is performed by the noise remover (306a) exceeds a predetermined value, the data input module (260) enables the frequency controller (236a).

6. A noise removing method of a video display apparatus (100) comprising a broadcast data input module (211) configured to input broadcast contents containing sound data and at least one data input module (260) configured to input information containing sound data other than the sound data contained in the broadcast contents, the noise removing method comprising:
inputting the sound data; and
selectively enabling or disabling, under control of the data input module (211), a frequency controller (236a) configured to perform an operation allowing only frequencies within a necessary range to pass therethrough.

7. The noise removing method of Claim 6, wherein the frequency controller (236a) is enabled when the data input module (260) is active, and is disabled when the data input module (260) is inactive.

8. The noise removing method of Claim 6, wherein
the video display apparatus (100) further comprising a noise remover (306a) configured to be a part of a controller (252) controlling the video display apparatus (100), and configured to remove noise of the sound data other than the sound data contained in the broadcast contents,
when a load on the controller (252) due to a noise removing process of the noise remover (306a) exceeds a predetermined value, the data input module (260) enables the frequency controller (236a), and wherein
the noise remover (306a) assigns a portion of the noise removing process to the frequency controller (236a).

9. The noise removing method of Claim 8, wherein, when a value of utilization of the controller (252) due to the noise removing process of the noise remover (306a) exceeds a predetermined value, the data input module (260) enables the frequency controller (236a).

10. The noise removing method of Claim 8, wherein, when a cumulative operating time of the controller during a certain time period while the noise removing process is performed by the noise remover (306a) exceeds a predetermined value, the data input module (260) enables the frequency controller (236a).

11. A video display system (1) comprising: a video display apparatus (100); and an information processor (180) connected to the video display apparatus (100) via a network, wherein the video display apparatus (100) comprising:
a broadcast data input module (211) configured to input broadcast contents containing sound data;
at least one data input module (260) configured to input information containing sound data other than the sound data contained in the broadcast contents; and
a frequency controller (236a) configured to receive the sound data, and configured to perform an operation allowing only frequencies within a necessary range to pass therethrough, the operation of the frequency controller (236a) being selectively enabled or disabled under control of the data input module (260).

12. The video display system (1) of Claim 11, wherein the frequency controller (236a) is enabled when the data input module (260) is active, and is disabled when the data input module (260) is inactive.

13. The video display system (1) of Claim 11, further comprising a noise remover (306a) configured to be a part of a controller (252) controlling the video display apparatus (100), and configured to remove noise of the sound data other than the sound data contained in the broadcast contents, wherein,
when a load on the controller (252) due to a noise removing process of the noise remover (306a) exceeds a predetermined value, the data input module (260) enables the frequency controller (236a), and
the noise remover (306a) assigns a portion of the noise removing process to the frequency controller (236a).

14. The video display system (1) of Claim 13, wherein, when a value of utilization of the controller (252) due to the noise removing process of the noise remover (306a) exceeds a predetermined value, the data input module (260) enables the frequency controller (236a).

15. The video display system (1) of Claim 13, wherein, when a cumulative operating time of the controller (252) during a certain time period while the noise removing process is performed by the noise remover (306a) exceeds a predetermined value, the data input module (260) enables the frequency controller (236a).
